# EUROPEAN PATENT SPECIFICATION

(11) **EP 2 165 612 B1**
(45) Date of publication and mention of the grant of the patent: **02.05.2012**
(21) Application number: 09011999.1
(22) Date of filing: 22.09.2009
(51) Int. Cl.: A23L 1/22, A23L 1/221, A23L 1/224, A23L 1/226, A23L 1/39, C11B 9/00

(54) **Flavour composition**
Aromatische Zusammensetzung
Composition aromatisante

(30) Priority: 23.09.2008 GB 0817393
(43) Date of publication of application: 24.03.2010
(73) Proprietor: Givaudan SA, 1214 Vernier (CH)
(72) Inventor: Tondeur, Sander, 1231 CE Loosdrecht (NL); Verhoek, Emeile, 3893 GH Zeewolde (NL); Winkel, Cornelis, 1402 GL Bussum (NL)
(74) Representative: Givaudan Patents

(56) References cited:
- EP-A- 0 429 080
- HUGHES J ET AL: "Synthesis of the flavour precursor, alliin, in garlic tissue cultures" PHYTOCHEMISTRY, PERGAMON PRESS, GB, vol. 66, no. 2, 1 January 2005 (2005-01-01), pages 187-194, XP004731151 ISSN: 0031-9422

## Description

This disclosure relates to flavour compositions and to a method of obtaining them.

There is provided use as flavour ingredient of a compound selected from S-allyl cysteine and S-1-propenyl cysteine.

There is further provided a flavouring composition comprising a compound selected from S-allyl cysteine and S-1-propenyl cysteine, plus standard flavouring additives.

There is further provided a method of flavouring an edible composition, comprising the addition thereto of a flavouring composition comprising a compound selected from S-allyl cysteine and S-1-propenyl cysteine.

In a particular embodiment, there is provided a method of conferring onion flavour on an edible composition, comprising the addition to the edible composition of onion powder and at least one compound selected from S-allyl cysteine and S-1-propenyl cysteine.

Onions have been used in foodstuffs and cooking since time immemorial, and onion flavour is highly desirable in many applications, such as snack foods. To date, the most usual onion flavour has been onion itself, usually in dried powder and flake form. While this is generally satisfactory, the onions from which the powders and flakes are made can vary in quality and availability, making the achievement of a satisfactory and consistent onion flavour sometimes difficult.

It has now been found that it is possible to create a satisfactory onion flavour that at least partially overcomes the problems of the art.

The use of S-allyl cysteine and S-1-propenyl cysteine 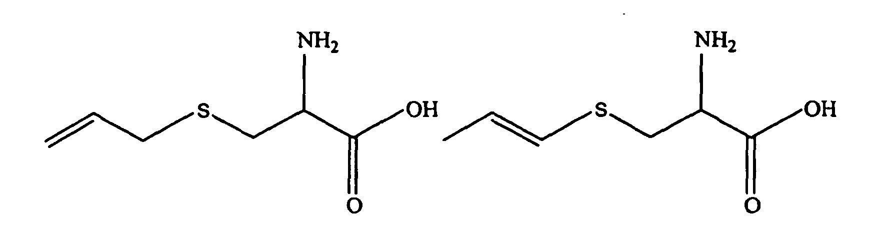 as onion flavour is surprising, especially as allyl cysteine is known to occur in onions and garlic, but has never before been identified as a means of obtaining onion flavour. There is a substantial literature on the use of allyl cysteine derived from onions and garlic as an antioxidant, but none as a flavour. In the Journal of Experimental Botany 2004 55(404):1903-1918, allyl cysteine sulphoxide is recognised as one of four "non-volatile odourless" cysteine sulphoxides (CSOs) that are the precursors of the odour and flavour of *Alliums.* The CSOs are also described in United States Patent 5,244,794, which provides a method for their production from *Allium* species.

The use of S-allyl cysteine and/or S-1-propenyl cysteine allows the replacement of a substantial proportion of onion powder in an onion flavouring composition. Because it can be made as a pure substance and is identical to the naturally-occurring substance, it allows the attainment of an onion flavouring that is both more consistent and cheaper than a 100% dried onion powder or flake. Allyl and/or propenyl cysteine confers on foodstuffs in which it is incorporated the functionality and sweetness of onion. It gives an allium aftertaste, which lingers in the mouth.

There is additionally provided an onion flavouring composition, comprising onion powder and at least one compound selected from S-allyl cysteine and S-1-propenyl cysteine present to the extent of up to 0.1 % by weight. The proportion of S-allyl cysteine and/or S-1-propenyl cysteine used will of course depend very much on the nature and intensity of flavour required in any given end-use, as further discussed hereinunder, but the 0.1 % represents a practical maximum in a flavouring composition beyond which it will not normally be necessary to go. More particularly, an onion flavouring composition will contain a compound to the extent of 0.01% by weight maximum.

By "edible composition" is meant any such composition consumed for nutrition or pleasure. Typical examples include, but are not limited to soups, broths, bouillions and stews, gravys, meat and vegetable extracts, frozen foods and snack foods.

In the case of onion flavour, there are the particular examples of snack foods, such as crisps and chips, based on potatoes, corn (maize), rice and tapioca.

The quantity of S-allyl cysteine and S-1-propenyl cysteine used in edible compositions may vary considerably, depending on the desired nature and intensity of flavour. The skilled person can easily determine the appropriate proportion in every single case. As a general guide, said edible compositions require between 0.1 and 100 ppm. In particular examples, the quantities may vary between 0.5 and 75 ppm and 1-50 ppm.

For snack foods, the proportion of flavour composition added is generally between 1 and 10% by weight of total weight. For other foods, the levels are typically between 0.1 and 1% by weight.

The flavouring compositions hereinabove described include allyl and/or propenyl cysteine, plus the standard ingredients known to the art for use in such compositions. These include, but are not limited to, other flavourants, thickeners, rheology and viscosity modifiers, and colouring matters.

When onion flavour is desired, the flavouring compositions hereinabove described provide a high-quality and consistent onion flavour. In connection with other edible compositions, a characteristic is a much more flavourful and delicious taste, such that pre-packaged foods can taste like their home-made equivalents. In cases in which onion flavour is desired, it is replaced up to 50%, more particularly up to 30%, of the onion powder normally added to an edible composition by S-allyl cysteine and S-1-propenyl cysteine.

S-allyl cysteine and S-1-propenyl cysteine are easily prepared by art-recognised methods, for example by the reaction of allyl or propenyl halide with cysteine in the presence of a base. S-1-propenyl-cysteine may also be prepared by the base-catalysed isomerisation of S-allyl cysteine.

The invention is now further described with reference to the following examples.

### Example 1:

### Preparation of S-allyl cysteine

Cysteine (25 g / 0.14 mol) was dissolved in water (25 ml) and stirred at 25°C. A solution of sodium hydroxide (19.6 g / 0.49 mol) in water (25 ml) was added slowly in 30 minutes. The temperature increased to 62°C. The mixture was left to cool to 25°C. Subsequently, allyl bromide (16.9 g / 0.14 mol) was added slowly, the temperature increased to 41°C. To ensure completion the mixture was stirred for an additional hour. The reaction mixture was cooled to 4°C and glacial acetic acid (29.4 g / 0.49 mol) was added slowly. A white precipitate was formed. The solid material was filtered over a fine glass-filter. The solids were washed 4 times 10 ml of ice-cold water to remove most of the sodium acetate. Yield was 16 g (68 %) of a white powder (still containing 1.5 % sodium acetate).

### Example 2

### S-allyl cysteine as onion powder replacer

Potato chips were prepared with onion powder and S-allyl cysteine/onion powder combination. The flavour was dosed 6 % on the chips.

A standard cheese-onion flavour was used:

| | Standard flavour | New flavour |
|---|---|---|
| Arginine | 0.03 % | 0.03 % |
| Ammonium chloride | 0.1 % | 0.1 % |
| Silicon dioxide | 0.5% | 0.5% |
| Disodium guanosine phosphate | 0.5 % | 0.5 % |
| Paprika oleoresin | 1 % | 1 % |
| Parsley leaves | 2 % | 2 % |
| Cheese powder | 2 % | 2 % |
| Sodium chloride | 12 % | 12 % |
| Yeast extract | 3 % | 3 % |
| Monosodium glutamate | 7 % | 7 % |
| Cream powder | 11 % | 11 % |
| Lactose | 30 % | 30 % |
| Onion powder | 30 % | 20 % |
| S-allyl cysteine | - | 0.0035 % |
| Maltodextrin | - | 9.9965 % |
| | 100 % | 100 % |

The chips were compared in two different sessions by an experienced sensory panel. No significant differences were observed.

### Example 3

A beef bouillon was prepared using commercially-available bouillon cubes. This bouillon was used as the reference. To part of the bouillon was added 2 ppm of S-allyl cysteine. The two samples were compared by a panel of experienced tasters.

The reference was described as salty and umami with some meaty process flavour notes. The whole group agreed that the sample containing the allyl cysteine tasted more like a home-made soup and was clearly preferred over the reference. It tasted more succulent, more rich and had more aftertaste.

### Example 4

A gravy was prepared using commercially-available gravy powder. The gravy was used as the reference. To part of the gravy was added 2 ppm of S-allyl cysteine. The two samples were compared by a panel of experienced tasters.

The reference was described as salty and umami with some meaty notes. The whole group agreed that the sample containing the S-allyl cysteine tasted like a home-made gravy and was clearly preferred over the reference. It tasted more succulent, more rich and had a more complete flavour and more aftertaste.

## Claims

1. Use as flavour ingredient of a compound selected from S-allyl cysteine and S-1-propenyl cysteine.

2. A flavouring composition comprising a compound selected from allyl cysteine and propenyl cysteine, plus standard flavouring additives.

3. A method of flavouring an edible composition, comprising the addition thereto of a flavouring composition comprising a compound selected from allyl cysteine and propenyl cysteine.

4. A method of conferring onion flavour on an edible composition, comprising the addition to the edible composition of onion powder and at least one compound selected from S-allyl cysteine and S-1-propenyl cysteine, the compound comprising from 0.1-100 ppm of the composition.

5. A method according to claim 4, in which the proportion of S-allyl cysteine and S-1-propenyl cysteine present in the composition is from 0.5-75, more particularly from 1-50 ppm.

6. An onion flavouring composition, comprising onion powder and at least one compound selected from S-allyl cysteine and S-1-propenyl cysteine present to the extent of 0.1 % by weight maximum.

7. An onion flavoured edible composition, comprising onion powder, in which up to 50% of the onion powder normally used therein is replaced by from 0.1-100 ppm of the total composition of at least one compound selected from S-allyl cysteine and S-1-propenyl cysteine.

## Patentansprüche

1. Verwendung einer unter S-Allylcystein und S-1-Propenylcystein ausgewählten Verbindung als Geschmacksstoffbestandteil.

2. Geschmackszusammensetzung, umfassend eine unter Allylcystein und Propenylcystein ausgewählte Verbindung sowie standardmäßige Geschmacksadditive.

3. Verfahren zum Versehen einer essbaren Zusammensetzung mit Geschmack, bei dem man die Zusammensetzung mit einer Geschmackszusammensetzung, die eine unter Allylcystein und Propenylcystein ausgewählte Verbindung umfasst, versetzt.

4. Verfahren zum Versehen einer essbaren Zusammensetzung mit Zwiebelgeschmack, bei dem man die essbare Zusammensetzung mit Zwiebelpulver und mindestens einer unter S-Allylcystein und S-1-Propenylcystein ausgewählten Verbindung versetzt, wobei die Verbindung 0,1-100 ppm der Zusammensetzung ausmacht.

5. Verfahren nach Anspruch 4, bei dem der in der Zusammensetzung vorliegende Anteil an S-Allylcystein und S-1-Propenylcystein 0,5-75 ppm und spezieller 1-50 ppm beträgt.

6. Zwiebelgeschmackszusammensetzung, umfassend Zwiebelpulver und mindestens eine unter S-Allylcystein und S-1-Propenylcystein ausgewählte Verbindung, die in einer Menge von bis zu 0,1 Gew.-% vorliegt.

7. Mit Zwiebelgeschmack versehene essbare Zusammensetzung, in der bis zu 50% des normalerweise darin verwendeten Zwiebelpulvers durch 0,1-100 ppm, bezogen auf die gesamte Zusammensetzung, mindestens einer unter S-Allylcystein und S-1-Propenylcystein ausgewählten Verbindung ersetzt sind.

## Revendications

1. Utilisation en tant qu'ingrédient aromatisant d'un composé choisi parmi la S-allylcystéine et la S-1-propénylcystéine.

2. Composition aromatisante comprenant un composé choisi parmi l'allylcystéine et la propénylcystéine, plus des additifs aromatisants classiques.

3. Méthode d'aromatisation d'une composition comestible, comprenant l'addition à celle-ci d'une composition aromatisante comprenant un composé choisi parmi l'allylcystéine et la propénylcystéine.

4. Méthode pour conférer l'arome d'oignon à une composition comestible, comprenant l'addition à la composition comestible de poudre d'oignon et d'au moins un composé choisi parmi la S-allylcystéine et la S-1-propénylcystéine, le composé comprenant de 0,1 à 100 ppm de la composition.

5. Méthode selon la revendication 4, dans laquelle la proportion de S-allylcystéine et de S-1-propénylcystéine présente dans la composition est de 0,5 à 75, plus particulièrement de 1 à 50 ppm.

6. Composition d'arome d'oignon, comprenant de la poudre d'oignon et au moins un composé choisi parmi la S-allylcystéine et la S-1-propénylcystéine présent dans une quantité de 0,1 % en poids au maximum.

7. Composition comestible à l'arome d'oignon, comprenant de la poudre d'oignon, dans laquelle jusqu'à 50 % de la poudre d'oignon normalement utilisée dans celle-ci sont remplacés par de 0,1 à 100 ppm de la composition totale d'au moins un composé choisi parmi la S-allylcystéine et la S-1-propénylcystéine.
